# EUROPEAN PATENT APPLICATION

(11) **EP 4 353 376 A1**
(43) Date of publication of application: **17.04.2024**
(21) Application number: 23201711.1
(22) Date of filing: 04.10.2023
(51) Int. Cl.: B21D 5/00, B21D 19/08, B21D 53/84, B21D 53/88, F16C 7/08, B60G 7/00, B21D 28/26, B21D 41/02

(54) **METHOD OF MANUFACTURING A MECHANICAL ARM**

(30) Priority: 13.10.2022 IT 202200021129
(71) Applicant: Bora S.p.A, 60030 Maiolati Spontini (AN) (IT)
(72) Inventor: BORA, Elio, 60030 Maiolati Spontini (AN) (IT)
(74) Representative: Bruni, Giovanni

(57) **Abstract**

SUMMARY

The present invention concerns the implementation of production processes based on sheet metal molding, for the manufacture of some mechanical elements.

Among the mechanical elements that are very rarely made by sheet metal molding there are some pieces that are commonly defined as mechanical "arms".

A mechanical "arm" is an elongated mechanical element in which, typically, in correspondence with the two heads, there are holes, designed to couple this mechanical "arm" to other elements of a more complex mechanism. In particular, the mechanical "arms" used to transfer a movement, or a force, from one point of a mechanism to another, have non-negligible mechanical resistance requirements, they are relatively large, and have complex shape characteristics to be obtained through sequences of cuts and folds.

The present invention, while accepting the use of more complex molds than those normally used, aims to indicate a new production method that can be applied for the production of a number of mechanical "arms", even when their shape requires a greater thickness than that obtainable from cutting a single sheet metal and, above all, when requirements of mechanical resistance and precision of the holes are required, such that the known technique is still oriented towards production methods other than sequences of cuts, folding, drawing, i.e. processes of sheet metal molding.

These objectives can be achieved through a production method which involves manufacturing a mechanical "arm" starting from an initial flat piece of sheet metal, suitably shaped, so as to present a symmetry with respect to its longitudinal axis. The method then uses a special mold composed of a decomposable matrix and a pair of punches.

This special mold allows you to make the edges of the holes on the heads of the "arm" being processed, when the semi-finished product is already folded: this allows you to control the dimensions of these holes with excellent precision.

Furthermore, the method benefits from the dismantling of the matrix of the mold, to be able to free the "arm" from the matrix itself, even after the holes have been trimmed, preventing it from getting stuck inside the "arm".

## Description

### Technical field of the Invention

In general, the field of application of the present invention concerns the use of production processes based on sheet metal molding for the production of some mechanical elements.
In particular, the invention indicates a production method applicable for the creation of certain types of pieces which are typically produced with other techniques, different from sheet metal molding, as these are pieces whose characteristics do not lend themselves poorly to production by cutting. and sheet metal bending (i.e., the operations that are normally performed in molding processes, which use a series of molds in sequence).

### Prior Art

The production of pieces, or semi-finished products, by sheet metal molding, represents one of the most efficient production processes, in terms of processing speed and cost-effectiveness ratio; and the efficiency increases with the quantity of pieces that must be produced. However, it is not always possible to use this production process: this happens when the pieces have characteristics that are poorly suited to this type of processing.

Among the characteristics of a semi-finished product that do not favor its production through sheet metal molding techniques, there are shape characteristics, constraints on processing tolerances and mechanical resistance characteristics.
Too complex shapes make complicated the handling of the semi-finished product during the molding sequence, and consequently the design of the molds.
When the permitted tolerances require very high precision machining, it is often necessary to make some trimming cuts after the folding, drawing or curling operations; it is therefore required to make precise cuts on pieces with shapes that are poorly suited to being manipulated and positioned on the molds that would be necessary to use; consequently, the required operations are not always practically possible, for geometric reasons and for the difficulty in the creation of the necessary molds.

Finally, when the mechanical resistance requirements of the piece are such that it would be necessary to use too thick sheet metal, it is often preferred to resort to chip removal or die-casting processes, or other types of processing.

Among the mechanical elements that are very rarely made by sheet metal molding there are some pieces that can be defined as mechanical "arms".

A mechanical "arm" is an elongated mechanical element which has, typically in correspondence with the two heads, some holes, designed to couple this "arm" to other elements of a more complex mechanism.

A mechanical "arm", therefore, among the various functions it can perform, and which depend from case to case, is essentially a connecting element between other elements of a more complex mechanism.

Excluding very simple "arms" which can be made with a flat and relatively thin shape, which can evidently be obtained directly from sheet metal with a cutting mold, i.e., in cases where fairly large "arms" must be made, the manufacturing techniques typically adopt methods which do not resort to sheet metal molding.

A fairly large "arm", in addition to having relatively complex shape characteristics to be obtained through sequences of cuts and bends, is generally used to transfer a movement, or a force, from one point of a mechanism to another, and therefore presents non-negligible mechanical resistance requirements.

Furthermore, as mentioned, the "arms" are always connected to other elements, through mobile couplings. The holes made at the ends of these "arms" are used to implement these mobile connections, and are normally designed to couple with pins, which must be inserted into these holes.

Such "hole-pin" coupling typically offer a degree of freedom in rotation; in other words, these pins must rotate on their axis inside the hole, and between the pin and the hole there must not normally be enough tolerance to allow significant vibrations of the pin inside the hole.

Ultimately, it can be stated that the processing to create the internal surface of the holes which are on the heads of these "arms" (i.e., at their ends) must be carried out with high precision and, in any case, a controllable precision. This is the reason why the internal processing of these holes is preferably carried out on solid material, and by milling, i.e., a type of processing that offers high guarantees on the control of surface tolerances in the finished work.

### Synthetic description of the Invention

The present invention, therefore, aims to indicate a new sheet metal molding procedure that allows the production of mechanical "arms", i.e., elongated elements provided with holes at their ends and suitable to act as a mechanical connection between other elements of more complex mechanisms.

The present invention, while accepting the use of more complex molds than those normally used, aims to indicate a new production method that can be applied for the production of a number of mechanical "arms", even when their shape requires a greater thickness than that obtainable from cutting a single sheet of sheet metal and, above all, when requirements of mechanical resistance and precision of the holes are required, such that the known technique is still oriented towards production methods other than sequences of cuts, folding, drawing, i.e. processes of sheet metal molding.

A preparatory purpose for achieving the objectives of the invention is also to indicate a particular type of bending mold that allows holes to be made at the ends of the "arms" with excellent control of the machining precision.

These objectives can be achieved through a production method for manufacturing a mechanical "arm" starting from an initial flat piece of sheet metal, suitably shaped, so as to present a symmetry with respect to its longitudinal axis.

And the production of said "arm" involves the execution of a sequence of molding operations performed on said initial flat piece of sheet metal (110), including at least the following processing steps, performed in the indicated order:
A. making at least one pair of initial holes on said initial flat piece of sheet metal, positioned symmetrically with respect to said longitudinal axis;
B. making two 90-degree folds along two bending lines, parallel to said longitudinal axis and placed symmetrically with respect to it;
   and, due to the folds indicated in the previous point "B",
   - said two initial holes of said at least one pair of holes indicated in the previous point "A" are, at least approximately, placed coaxially, substantially aligned one in front of the other, and spaced approximately as far apart as said two parallel bending lines indicated in the previous point "B", and
   - said initial flat piece of sheet metal is folded on itself forming an intermediate folded semi-finished piece in which there is an internal space between two parallel flaps of said piece of sheet metal;
   and the production of said "arm" goes on with the execution of a subsequent processing step which consists in
C. the bending, with 90-degrees towards the inside, of the edges of said two initial holes, being said bending carried out through the use of a mold which includes a matrix composed of at least two pieces and a pair of punches, in which:
   i. said matrix composed of at least two pieces, when coupled to said intermediate folded semi-finished piece, to act as an antagonist element to the punches,
      - it occupies the entire thickness of said internal space between the two parallel flaps of said intermediate folded semi-finished piece, and
      - it has a matrix hole, larger than said initial holes, and said matrix hole is interposed between said two initial holes, aligned and in axis with them;
   ii. said punches are configured to pass through said initial holes and said matrix hole, all roughly aligned, performing the following operations:
      - a first punch processes the edge of one of said initial holes by penetrating from one side of said intermediate folded semi-finished piece, and going to oppose the intermediate matrix hole,
      - a second punch processes the edge of the other of said initial holes by penetrating from the opposite side of said intermediate folded semi-finished piece, and also going to oppose the intermediate matrix hole;
      the processing of the edges of the initial holes is completed with the removal of the matrix from the internal space between two parallel flaps of said piece of sheet metal, by separating the two pieces that make up said matrix, so that the hole in the matrix does not remain hooked to the edges made on the initial holes

### Brief Description of the Drawings

The main advantage of the present invention consists in the fact that the production method implemented according to the teachings of the present invention allows to offer a satisfactory response to the main needs for which it was conceived, i.e., the need to extend production by sheet metal molding (which is a very efficient production processes) even to quite common mechanical elements, such as mechanical "arms", which normally, and according to known practice, are often produced with die-casting processes.

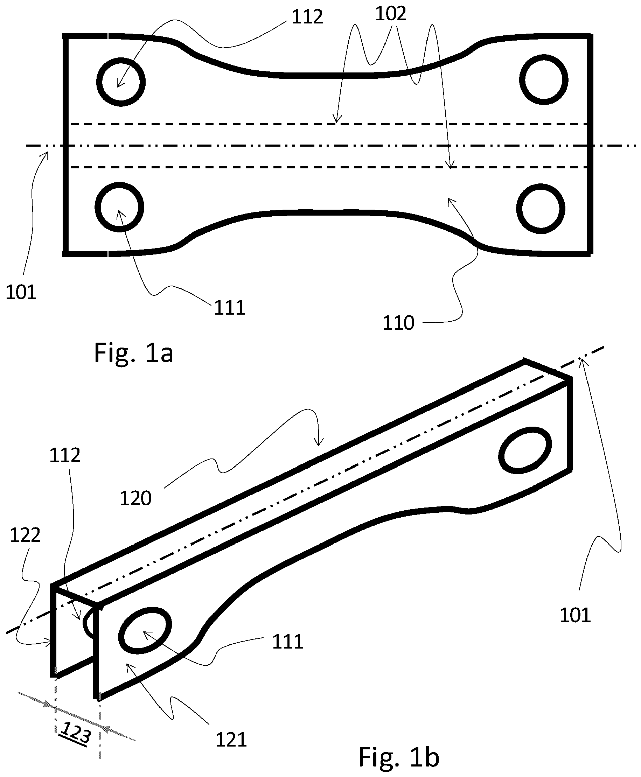

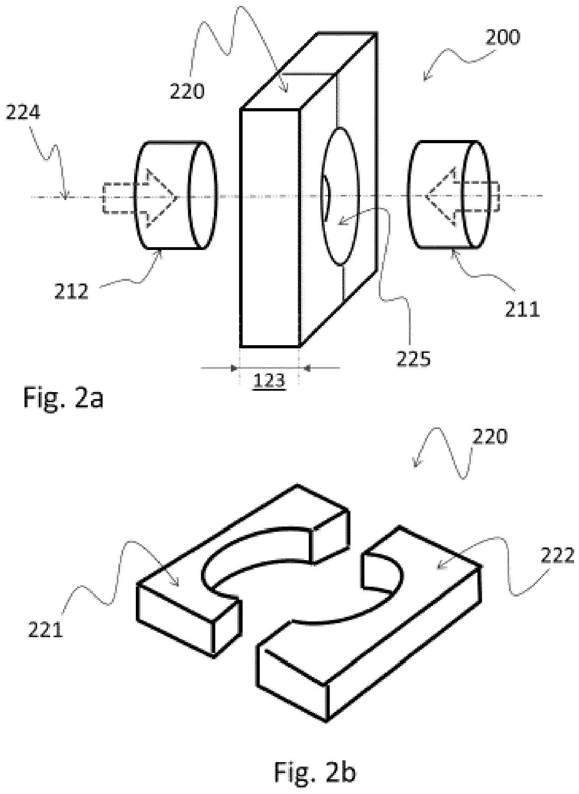

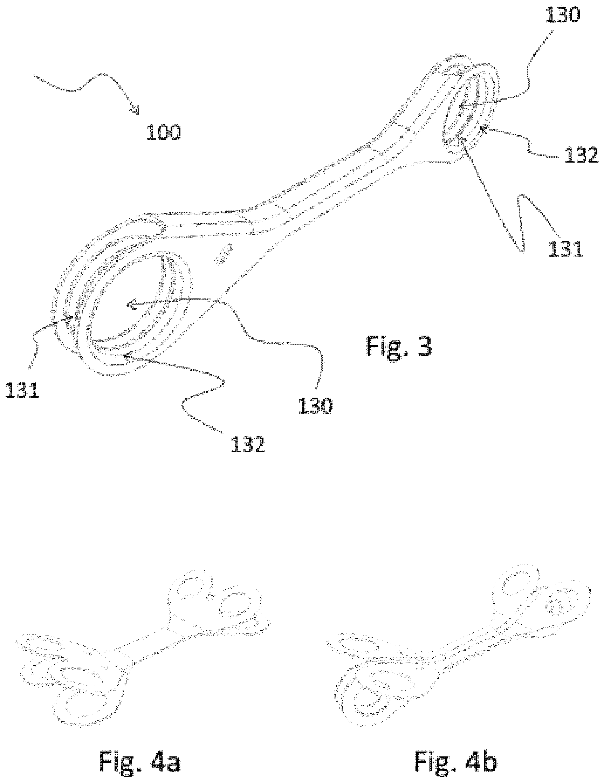

Furthermore, this invention also presents further advantages, which will be more evident from the following description, from an example of practical implementation, presented as a non-limiting example, which illustrates further details, from the attached claims which form an integral part of the present description, and from the figures attached in which:
✔ Figures 1a and 1b show, in a schematic and essential way, the first bending operations envisaged in a production process of an "arm" using a production method according to the teachings of the invention, starting from an initial flat sheet metal piece;
✔ Figure 2a shows, as a whole, the mold necessary to perform the edging of the holes of the mechanical "arm" which must be made according to the teachings of the invention;
✔ Figure 2b shows, in a schematic and essential way, the matrix of the mold presented in Figure 2.
✔ Figure 3 shows an example of a mechanical "arm" made according to the teachings of the invention.
✔ Figures 4a and 4b show the first bending operations foreseen in the production process of the "arm" in the form of implementation presented in Figure 3.

### Detailed Description

The production of semi-finished pieces, or even finished pieces, through sheet metal molding processes, requires that the processes start from a flat piece of sheet metal which is subsequently shaped through cuts, bends and other various deformations.

Figure 1a shows an initial piece of flat sheet metal, indicated with the number 110. Said initial piece of flat sheet metal 110 is already shaped, in the sense that it has already been subjected to some initial cutting processes that can be easily carried out with various techniques, including, for example, through the use of appropriate cutting molds. In any case, we will not describe these initial processes since, as mentioned, they are relatively simple and, above all, they can be carried out according to the known technique, therefore they do not present particular technical problems. So, just the essential characteristics of said initial flat sheet metal piece 110 are described which allow the processing to continue according to the teachings of the present invention.

The first characteristic to be highlighted is that said initial piece of flat sheet metal 110 has an elongated shape and a longitudinal axis of symmetry, which is indicated in Figure 1a with the number 101.

The second characteristic to be highlighted is that said initial piece of flat sheet metal 110 has one or more pairs of initial holes. In the typical case of a mechanical "arm", as also shown in Figure 1a, there are two pairs of initial holes, located near the ends of said initial piece of flat sheet metal 110. Each pair of said initial holes is also arranged symmetrically with respect to said longitudinal symmetry axis 101; one of these two pairs of initial holes is indicated in Figure 1a with the numbers 111 and 112.

Finally, in Figure 1a, indicated with the number 102, two bending lines are highlighted, and they are parallel to said longitudinal symmetry axis 101.

Figure 1b shows said initial piece of flat sheet metal 110 after the execution of two 90-degree bends along said two bending lines 102. As a result of this deformation (i.e., the execution of the aforementioned two 90-degree bends), said initial piece of flat sheet metal 110 is transformed into a intermediate folded semi-finished piece, indicated in Figure 1b with the number 120. Said intermediate folded semi-finished piece 120 has some peculiar characteristics which distinguish the production method according to the present invention.

A first characteristic consists in the fact that said intermediate folded semi-finished piece 120 has two parallel flaps of sheet metal, indicated with the numbers 121 and 122, and these two flaps are spaced apart so as to form a space between them of constant width: width which, in Figure 1b, is indicated with the number 123.

A further characteristic of said intermediate folded semi-finished piece 120 consists in the fact that, due to the symmetries of said initial piece of flat sheet metal 110, and the bends performed, the holes of each pair are substantially aligned one in front of the other and spaced apart from each other approximately how far apart the two parallel folding lines 102 are, i.e., at the distance 123.

In Figure 1b, there is shown the hole 111, which is located in the flap 121 of said folded intermediate semi-finished piece 120, behind it, only partially visible in Figure 1b (because covered by the flap 121), there is the hole 112 which is located in the flap 122, and which is aligned with the corresponding hole 111.

Said intermediate folded semi-finished piece 120, shown in Figure 1b, begins to make apparent the main characteristics of a mechanical "arm".

By appropriately sizing the thickness of the sheet metal, as well as choosing the most appropriate material, it is possible to obtain good control of the mechanical performance of the "arm", which, having a thickness determined by the two flaps 121 and 122, can easily achieve resistance and stiffness performances even quite high (so as to satisfy a large part of the application requirements that arise in real cases).

However, there remains a technical problem that is not easy to solve regarding the machining precision of the hole. In fact, one of the most important characteristics of this particular type of product, i.e., the mechanical "arm", is given by the fact that the holes placed at the ends of the "arm" represent the part of the product that must be worked with the greatest precision, because they are used for a mobile mechanical coupling, typically a sliding coupling, with other pieces. It is clear that any imperfect machining of the internal part of the holes would have repercussions in defective couplings destined to degrade the performance of the entire mechanism of which the "arm" is only one of the elements.

Before going into the details of the invention regarding the processes that make very precise the manufacturing of the holes, it is noted that the folding lines 102 must not necessarily be understood as folding lines in the strict sense. In other words, it is not necessary for the bending edges to be sharp edges (as in the schematic and indicative representation proposed in Figure 1b), indeed, it could even be more convenient to make gentle bends, avoiding stressing the material of the sheet metal. What matters, for the purposes of implementing the method according to the invention, is that the flaps 121 and 122, once folded, in the areas where said initial holes are present (for example the hole 111 and the hole 112) are parallel, so that the holes are aligned and as coaxial as possible.

However, although the cuts, drillings and bends can be carried out with precision, the two holes 111 and 112 (as well as the holes of any other pairs of holes that are present in the "arm") will hardly be perfectly coaxial. Furthermore, the overall hole constituted by the pair of holes aligned on the two flaps 121 and 122 does not have a continuous and smooth internal surface, as it should be to ensure a good sliding coupling with another mechanical element which has a pin designed to be inserted into the holes of the "arm", to rotate easily inside the hole itself.

The process with which it is possible to obtain the desired finish in the holes of a mechanical "arm", made with a sheet metal molding production process, consists in the so-called edging of both holes which, after bending the initial piece of flat sheet metal 110, are aligned one in front of the other. This edging of the pair of holes is carried out with a further 90-degree bend towards the inside.

Such an operation of edging the pair of holes, in which the two bends on the two holes are produced in opposite directions, is an operation that presents some technical problems; it is for this reason that, according to current practice, it is typically never performed on already bent pieces.

Current practice would involve carrying out the edgings before bending the initial piece of flat sheet metal 110 in order to have the space to carry out the processing with a classic die-punch mold, and, in this way, the bends on both holes would be carried out in the same towards.

It is noted that the hole edging operation is an operation that requires forcefully deforming the material of which the sheet metal is made by subjecting it to considerable traction. These operations are the most difficult to control precisely because they involve very high forces and are sensitive even to small imperfections in the starting material.

Following the typical machining order, which would involve the edging of the holes before bending, the subsequent bending would have to act on a deformed piece (i.e., a piece in which the edgings of the holes have already been made), and therefore also the bending dies, not acting on a flat piece, would be more complex, and the precision of the bends would be difficult to be guaranteed. To solve all these problems, the present invention proposes the use of an original edging mold, conceived and designed to create edgings with bending in the opposite direction acting on holes which, at the end, will result to be perfectly coaxial.

Figure 2a shows, in a schematic and essential way, a mold that allows the required edgings to be made with excellent control of the machining precision with regards to the internal finish of the hole which must appear on the mechanical "arm" once it is finished. The mold presented in Figure 2a is indicated as a whole with the number 200.

The matrix of the edging mold 200 according to the invention is indicated in Figure 2a with the number 220, and has some differences compared to the typical matrixes used in hole edging molds. The latter are usually designed to be positioned above the pressing basement and support the semi-finished product, or in any case they are positioned in a firm way to oppose the movement of a single punch, which, in the act of pressing, goes to compress forcefully onto the matrix.

The matrix 220 according to the teachings of the present invention, however, is designed to be inserted inside the so-called folded intermediate semi-finished piece 120, and more precisely in the space that forms between the two flaps 121 and 122 as a result of the folds. In fact, the thickness of said matrix 220 is indicated with the number 123, precisely to highlight that said matrix 220 is designed to fit precisely between the two flaps 121 and 122 of the folded intermediate semi-finished piece 120.

With regard to the positioning of said matrix 220 in the pressing compartment, numerous implementation variations are possible. In a preferred form of implementation said matrix 220 is mounted in the pressing compartment vertically, and fixed to the base, while the intermediate folded semi-finished piece 120 is placed above so that the two flaps 121 and 122 adhere to the lateral surfaces of the matrix itself.

In any case, regardless of how said matrix 220 is mounted in the pressing compartment, what matters for the purposes of implementing the present invention is that said matrix 220 has at least one passing-through matrix-hole, indicated in Figure 2a with the number 225, and that said matrix-hole 225 aligns with a pair of initial holes 111 and 112 present in the folded intermediate semi-finished piece 120. In fact, an essential characteristic of said matrix 220 is that it is designed for the execution of the edgings of both initial holes found in the two flaps 121 and 122 of the folded intermediate semi-finished piece 120.

It is underlined at this point of the description that the execution of both the edgings with the same mold is truly essential in order to obtain a processing having the necessary precision, and does not only represent a measure to improve production efficiency due to the fact that the number of maneuvers to be performed on the semi-finished product during the various molding presses is reduced.

The axis of said matrix-hole 225 is indicated in Figure 2a with the number 224 and, as mentioned, the matrix 220 is designed so that said axis 224 overlaps with the axes of the initial holes 111 and 112. Therefore, the two initial holes 111 and 112 and the matrix hole 225, before the edging operation, are all aligned, with the alignment precision that can be obtained, which typically cannot be a high precision, given that this operation will have to be performed repetitively and as quickly as possible.

Obviously said matrix-hole 225 must be slightly larger than the initial holes 111 and 112, because the latter must be edged, and therefore the edged bending operation ends up widening them, folding their edge onto the internal surface of the matrix-hole 225.

The edging mold 200 shown in Figure 2a then highlights the presence of two punches, indicated with the numbers 211 and 212.

Said punches 211 and 212 also share the same axis 224 of the matrix 220 and they are designed to move in the opposite direction, one towards the other, along said axis 224, as shown by the dotted arrows shown in Figure 2a, which highlight precisely the movement of the two punches. Said two punches 211 and 212, therefore, are designed to fit into the matrix hole 225, penetrating from the two opposite sides, thus performing the two edgings of the initial holes 111 and 112 present on the two flaps 121 and 122 of said folded intermediate semi-finished piece 120.

At this point it is useful to underline a first technical advantage that can be obtained with this manufacturing procedure.

In fact, it was highlighted the difficulty of performing folds with such a precision able to make perfectly coaxial the two initial holes 111 and 112, present on the two flaps 121 and 122 of said folded intermediate semi-finished piece 120.

The axis 224, shared by the two punches 211 and 212 and the matrix 220, instead, can be positioned and determined with much more controllable precision, given that the processes that concern the manufacture of the molds, as well as their fixing in the pressing compartment, are carried out once and for all, and can be carried out with great precision as the speed of preparation of the molds is not critical.

Consequently, even if the initial holes 111 and 112 were slightly offset following the bending necessary to obtain said folded intermediate semi-finished piece 120, starting from said initial piece of flat sheet metal (suitably shaped) 110, after their edging, said initial holes 111 and 112 (therefore enlarged) both assume the same axis 224, thus correcting any imperfections in the initial alignment.

A second technical advantage that can be obtained with this machining procedure concerns the internal face of the holes after their edging. In fact, if it is true that the edging maneuver stresses the material in such a way as to make it difficult to control the exact size of the cutting edge of the sheet metal inside the hole, it is also true that this edge extends towards the inside of the hole (impacting only the length of the folded part) in an area where precision is not required, given that the hole of the "arm" must be sized accurately only in the final dimension of the hole after the edgings, and this dimension is determined by the size of the punches which are tools that can be produced with an excellent control of the precision.

The hole that, in the end, is obtained on the "arm", therefore, presents excellent requirements for controllability of the machining precision, given that it is composed of the two holes on the two flaps 121 and 122 of the folded intermediate semi-finished piece 120, which can be made perfectly aligned from the edging maneuver. Furthermore, the internal surface of the overall hole on the "arm" is also workable with excellent precision, since it is not determined by the effect of a cut of a sheet metal but by a conformation determined by a punch, the size of which is excellently controllable.

In Figure 2b, a further feature of the mold 200 is shown, and in particular a feature that concerns the matrix 220.

In fact, said matrix 220 is composed of two parts that can be separated from each other, and which in Figure 2b are indicated with the numbers 221 and 222.

The fact of making a matrix 220 with two separable parts allows it to be removed after the edging, even if the matrix 220 is stuck in the space between flaps 121 and 122 of the folded intermediate semi-finished piece 120. In fact, while before performing the edgings of the holes it is possible to insert the matrix 220 into this space (which has a constant width and without parts on which the matrix can hook on); once the edgings have been made, however, the matrix 220 would remain stuck between the flaps 121 and 122, held there by the edges of the two initial holes 111 and 112 which are folded inside the matrix-hole 225, hooking onto it. By being able to divide the matrix 220 into at least two parts, however, it is possible to remove the matrix from the semi-finished piece, to proceed with a subsequent processing.

The processes described so far represent the essential processes to characterize the production method of a mechanical "arm" by sheet metal molding according to the invention.

It is also evident that the complete production of a finished "arm" can be completed according to many variations, which give rise to a wide variety of possible "arms", all achievable with the production method according to the invention.

Figure 3 shows an example of a mechanical "arm", indicated as a whole with the number 100. It is an "arm" for a suspension, which has been actually produced by applying the teachings of the invention, and which allows us to illustrate some variants implementation or other construction details that are compatible with the method taught.

The "arm" 100 represented in Figure 3 recalls the classic shape of mechanical "arms" made by die-casting, but allows us to appreciate very clearly how it was instead obtained by molding starting from a piece of sheet metal.

Attention is paid to the two holes located at the two ends of the "arm" 100, which are indicated with the number 130.

Said holes 130 constitute the most critical parts of the "arm" 100 to be made, because they typically have to be made with precision machining.

The internal surface of both holes 130 is indicated with the number 132, and although it is composed of the folds made on the initial holes undergone to edging of the sheet metal, said internal surface 132 offers optimal contact with the external surface of an eventual pin, which can be inserted into each of the two holes 130, and which can rotate inside the hole itself by sliding on said surface 132. In fact, the surfaces 132, although not continuous, offer a good support surface also suitable for being lubricated.

Said surfaces 132, as mentioned, are not continuous, but they are still an excellent approximation of the internal surfaces of a hole obtained by milling. Their non-continuity is due to the presence of a central crack, visible on both holes, and indicated with the number 131. Said crack 131 corresponds to the two margins of the initial holes, before they are undergone to edging: it is observed that any cutting inaccuracies (for making the initial holes), as well as the inaccuracies determined by the edging maneuver, are reflected exclusively on the width of this crack, i.e., in an aspect on which there is no precision constraint, given that the crack 131 may not even be regular. What matters, as already mentioned, is that each hole 130 has a very precise diameter to guarantee exactly the desired tolerances in the coupling with the pin which will then have to be inserted into that hole 130.

The precision of the diameter of the hole 130 is guaranteed by the edging maneuver, i.e., by the precision with which the punches and the matrix, belonging to the particular edging mold that has been used, are made.

In any case, and especially when the sheet metal used for the manufacture of the "arm" 100 is thick enough, the machining precision of the final hole 130 can be further improved by providing a further processing phase in which milling or filing is carried out of the internal surface 132 of the final hole 130.

In a preferred form of implementation, the two punches, which carry out the edging on each side, can take on a shape which is not perfectly cylindrical, but slightly beveled at their tip, i.e., the part which is first inserted into the matrix-hole 225 (as well as, obviously, in the initial hole 111 or 112, of which each punch must carry out the edging) and then assume a constant circular section in the central part of the punch.

Thanks to this shape of the punches 211 and 212, the edging can be carried out by acting with a gradual impact on the edge of the two holes to be undergone to edging, so as not to produce too violent impacts (and dents) on the material of which the sheet metal is made, in particular in the area where this material must form the internal surfaces 132 of the hole 130.

This particular conformation of the two punches requires that they penetrate more deeply into the matrix-hole 225, and therefore the edging of the two holes cannot occur strictly simultaneously, as the two punches would collide and would not both be able to enter completely, to the correct depth, in the matrix-hole 225. Therefore, the edging must be carried out by first entering one of the two punches, from one of the two parts of the matrix-hole, after which this will retract to let the entrance of the opposite punch which, in turn, will also have to penetrate deeply into the matrix-hole 225, on the other side.

In some methodological variants, the alternating action of the two punches can take place by repeating the penetration action of the punches two or more times, so as to make the processing of the internal surface 132 of the holes 130 increasingly precise, avoiding the formation of imperfections in corresponding to the crack, imperfections which could protrude towards the internal part of the hole 130.

In addition to the methodological variations linked to the machining of the holes 130, which in any case constitute the most critical part of the production process, thanks to the example in Figure 3, other methodological variations can also be appreciated, which can be introduced into the method according to the invention.

In particular, the production method may include some additional folds that allow you to work with greater flexibility in the shape to be given to the finished "arm" 100.

Figures 4a and 4b show a sequence of folds different from the essential one shown with the help of Figures 1a and 1b, which were intended to show only the effects of the essential folds along the directions parallel to the longitudinal symmetry axis 101 of the initial piece of flat sheet metal 110.

Figure 4a shows the execution of two (additional) folds along transversal directions with respect to the longitudinal axis of symmetry. The piece, folded as shown in Figure 4a, is then folded with the two additional 90-degree folds so as to obtain the folded intermediate semi-finished piece in which the initial holes are approximately aligned in front of each other. This second folding maneuver is shown in Figure 4b and (contrary to the folds shown in Figure 4a which represent an optional choice) constitutes an essential fold for the application of the method according to the invention.

The fact that said second folding maneuver shown in Figure 4b, essential, can follow a previous optional folding, shows how it is possible to obtain different implementation variants of the invention, for example, by adding optional phases to the essential processing phases.

Furthermore, the example of making an "arm" shows some technical advantages of the invention, which is characterized by the way in which the edgings of the holes are made. In fact, the first folds shown in Figure 4a influence the difficulty of performing the second folds, shown in Figure 4b, given that the latter are no longer performed along a straight line, but rather along a line that has an angle. The bends shown in Figure 4b therefore stress the material of which the sheet metal is made in tension, expanding it quite a bit to form the desired bend. This maneuver is one of those that, once again, can compromise the perfect alignment of the holes, which must be achieved after the folds shown in Figure 4b. This risk of imperfection, however, is completely acceptable, given that the production method of the "arm" then proceeds with the edging maneuvers previously described, which ensure that the machining requirements foreseen for the holes 130 of the finished "arm" are obtained.

In essence, the edging carried out according to the teachings of the invention is very effective, because it allows the invention to be implemented according to many variations: for example, by performing non-essential folds, for the sole purpose of playing with the final shape to be given to the "arm", and without being limited by the potential difficulty of completing the manufacturing of the "arm" respecting the tolerances foreseen in the machining of the holes 130.

### Concluding remarks

In general, as already partially anticipated in the previous part of this description, the production method of a mechanical "arm" implemented according to the teachings of the present invention lends itself to numerous implementation variations.

Among the variants that have already been mentioned there is the possibility of adding further folding or cutting phases, so as to be able to create a large variety of mechanical "arms" of different shapes.

Even the edging mold 200, which represents an essential tool for the implementation of the method according to the invention, can be made according to different variants. In addition to the dimensional variations, which are obvious, given that the method is applicable to create a wide variety of "arms" of different shapes and sizes, various arrangements can be adopted for the shape of the punches, in order to stress more or less gradually the material of which the sheet metal is made, in the act of the edging.

As a consequence of the choice of the shape of the punches, their stroke must then be consistently calibrated when they move to penetrate the hole 225 of the matrix. Even the sequence of pressures of the two punches 211 and 212 can, and must, be set according to different variations, depending on how deeply each punch must enter the hole 225.

Some variations, then, may concern the material with which the punches 211 and 212 are made, this because their contact with the sheet metal during the edging of the holes 130, determines the surface processing characteristics of the holes 130, and in particular their internal surfaces 132 which, as stated several times, must be the part of the "arm" most cared for from the point of view of surface processing.

Even the matrix 220 can be made according to some variations, for example it can be composed of a number of separable pieces greater than two, given that the only requirement that matters is that the hole in the matrix 225 can be opened to allow the extraction of the matrix which would otherwise be trapped on the hole 130 after its edging.

Depending on the shape and number of individual parts of the matrix, different ways of manipulating the product during its processing can then be conceived.

In general, an area of improvement can therefore concern the presence of further accessory elements, or precautions that can be introduced precisely to integrate tools for manipulating the artefact, or to facilitate its manipulation during all production phases.

Another interesting variation that may concern the matrix 220 is about its overall shape. In fact, in the present description, attention has always been paid on the hole 225, without saying anything about the external conformation of this matrix 220.

In fact, it can also be designed to also act as a matrix for the bending mold, to perform the two 90 degree bends parallel to the longitudinal axis 101 of the initial flat sheet metal piece 110.

In fact, it is sufficient that the external border of the matrix 220 is suitably designed for the purpose. This choice, i.e., the choice of integrating the edging matrix (previously described), in a bending mold has the non-negligible advantage that this tool, after bending, would already be positioned between the two flaps 121 and 122 of the intermediate folded semi-finished piece 120, as it appears after the folding operation. This double functionality does not create any problem of mutual interference between the two functions because they impact the conformation of two different areas of the tool which must act as a matrix both in the bending mold and in the edging mold. All you need is the foresight to make the hole 225, or holes, of the matrix in the correct position, i.e., taking into account of the positioning that the tool must have to carry out the initial bending operation.

In this hypothesis, the initial flat sheet metal piece 110 would be positioned above the matrix 220 which also acts as an opposing tool (i.e., as a matrix) of a bending mold, this being suitably shaped in its upper part. Once the folding has been performed, the intermediate folded semi-finished piece 120 would already be ready to undergo the edging of the initial holes 111 and 112, which would be aligned with the hole, or holes, 225 of the matrix 220 that does not need to be moved after the execution of the folding; a series of relatively onerous manipulations would thus be saved.

All these variations can be implemented by those skilled in the art without departing from the scope of the invention, as it emerges from the present description and the attached claims; and many of these variations could offer additional benefits to those already mentioned.

The invention is therefore susceptible to further evolutionary efforts, which can be carried out on multiple fronts: such eventual developments, if not included in this description, may be the subject of further patent applications associated with the present invention.

## Claims

1. A method of manufacturing a mechanical "arm" (100) starting from an initial flat piece of sheet metal (110), suitably shaped, so as to present a symmetry with respect to its longitudinal axis (101)
and the production of said "arm" involves the execution of a sequence of molding operations performed on said initial flat piece of sheet metal (110), including at least the following processing steps, performed in the indicated order:
a. making at least one pair of initial holes (111 and 112) on said initial flat piece of sheet metal (110), positioned symmetrically with respect to said longitudinal axis (101);
b. making two 90-degree folds along two bending lines (102), parallel to said longitudinal axis (101) and placed symmetrically with respect to it;
and, due to the folds indicated in the previous point "b",
- said two initial holes (111 and 112) of said at least one pair of holes indicated in the previous point "a" are, at least approximately, placed coaxially, substantially aligned one in front of the other, and spaced approximately as far apart as said two parallel bending lines indicated in the previous point "b", and
- said initial flat piece of sheet metal (110) is folded on itself forming an intermediate folded semi-finished piece (120) in which there is an internal space between two parallel flaps (121 and 122) of said piece of sheet metal;
and the production of said "arm" goes on with the execution of a subsequent processing step which consists in
c. the bending, with 90-degrees towards the inside, of the edges of said two initial holes (111 and 112), being said bending carried out through the use of a mold which includes a matrix (220) composed of at least two pieces (221 and 222) and a pair of punches (211 and 212), in which:
i. said matrix (220) composed of at least two pieces, when coupled to said intermediate folded semi-finished piece (120), to act as an antagonist element to the punches (211 and 212),
- it occupies the entire thickness (123) of said internal space between the two parallel flaps (121 and 122) of said intermediate folded semi-finished piece (120), and
- it has a matrix hole (225), larger than said initial holes (111 and 112), and said matrix hole (225) is interposed between said two initial holes (111 and 112), aligned and in axis with them;
ii. said punches (211 and 212) are configured to pass through said initial holes (111 and 112) and said matrix hole (225), all roughly aligned, performing the following operations:
- a first punch (211) processes the edge of one of said initial holes (111 or 112) by penetrating from one side of said intermediate folded semi-finished piece (120), and going to oppose the intermediate matrix hole (225),
- a second punch (212) processes the edge of the other of said initial holes (212 or 211) by penetrating from the opposite side of said intermediate folded semi-finished piece (120), and also going to oppose the intermediate matrix hole (225);
d. the processing of the edges of the initial holes (111 and 112), indicated in the previous point "c", is completed with the removal of the matrix (220) from the internal space between two parallel flaps (121 and 122) of said piece of sheet metal, by separating the two pieces (221 and 222) that make up said matrix (220), so that the hole in the matrix (225) does not remain hooked to the edges made on the initial holes (111 and 112).

2. Method according to claim 1 in which each punch (211 or 212), in the part that first penetrates the initial hole (111 or 112) to carry out the edge, has a smaller section than the circular section of its central part, which is the section which determines the size of the final hole (130) of the mechanical "arm" (100).

3. Method according to claim 2 in which the processing of the edges of the two initial holes (111 and 112) is carried out in sequence: first the processing of a first initial hole (111 or 112) is carried out using the first punch (211 or 212), and then a second initial hole (112 or 111) is processed by using a second punch (212 or 211).

4. Method according to claim 1 wherein said matrix (220) is composed of a number of separable pieces greater than two.

5. Method according to claim 1 in which said matrix (220), in addition to having at least one hole (225) suitable for supporting the processing of the initial holes, is shaped in its outer part to act as a matrix in the bending mold used to make the 90-degrees bends indicated in point "b" of claim 1.

6. Method according to claim 1 in which, before the execution of the two 90-degree folds indicated in point "b" of claim 1, at least one other bend is executed along a direction transversal to said longitudinal axis (101).

7. Method according to claim 1 in which after the processing of the edges of the initial holes (111 and 112), the internal surface (132) of the final hole (130) is finished with a filing or a milling.
